# EUROPÄISCHE PATENTSCHRIFT

(11) **EP 2 853 639 B1**
(45) Veröffentlichungstag und Bekanntmachung des Hinweises auf die Patenterteilung: **16.09.2015**
(21) Anmeldenummer: 14002971.1
(22) Anmeldetag: 28.08.2014
(51) Int. Cl.: E02D 3/039

(54) **Müllverdichter**
Trash compactor
Compacteur de déchets

(30) Priorität: 27.09.2013 DE 102013016127
(43) Veröffentlichungstag der Anmeldung: 01.04.2015
(73) Patentinhaber: BOMAG GmbH, 56154 Boppard (DE)
(72) Erfinder: Haubrich, Thomas, 56290 Gödenroth (DE); Vollrath, Peter, 55469 Belgweiler (DE); STEIN, Hagen, 4900 Langenthal (CH); Stein, Peter, 56291 Leiningen (DE)
(74) Vertreter: Heidler, Philipp

(56) Entgegenhaltungen:
- DE-U1- 9 413 270

## Beschreibung

Die Erfindung betrifft einen Müllverdichter so wie z.B. aus der DE 9413270 U1 bekannt, mit einem Maschinenrahmen, mit Fahreinrichtungen, einem Antriebsmotor, einer Fahrerkabine, die auf dem Maschinenrahmen angeordnet ist, und mit einer Luftansaugeinrichtung mit wenigstens einer Ansaugöffnung, wobei die Luftansaugeinrichtung in Vorwärtsrichtung hinter der Fahrerkabine angeordnet ist und sich wenigstens teilweise über die Rückseite der Fahrerkabine bis hin zum Dach der Fahrerkabine beziehungsweise bis in Höhe des Daches der Fahrerkabine in Vertikalrichtung erstreckt.

Derartige Müllverdichter finden typischerweise auf Mülldeponien zur Verteilung, Zerkleinerung und/oder Verdichtung des Mülls Verwendung. Solche speziellen Müllverdichter sind beispielsweise mit den Modellen BC 472 RB, BC 472 RS, BC 772 RB-2/RB-3/RS-2/RS-3 und BC 972 RB-3 der Anmelderin bekannt und haben sich bestens bewährt.

Der Grundaufbau solcher Müllverdichter umfasst beispielsweise einen Maschinenrahmen mit einem Vorderrahmen und einem Hinterrahmen, die über ein Knickgelenk miteinander verbunden sind. Ferner ist ein Antriebsmotor, üblicherweise ein leistungsstarker Verbrennungsmotor, vorhanden, über den die für den Betrieb des Müllverdichters erforderliche Antriebsenergie zur Verfügung gestellt wird. Mit Hilfe des Antriebsmotors werden unter anderem auch Fahreinrichtungen für den Fahrantrieb angetrieben, bei denen es sich beispielsweise um Schaffußbandagen handeln kann. Auf dem Maschinenrahmen ist ferner eine Fahrerkabine angeordnet, häufig schwingungsgedämpft gegenüber dem Maschinenrahmen. Bei der Fahrerkabine handelt es sich insbesondere um eine geschlossene und klimatisierte Fahrerkabine, beispielsweise auch mit separater Frischluftversorgung, um dem Fahrer eine von der Außenumgebung autarke Arbeitsatmosphäre zur Verfügung zu stellen. Dies ist insbesondere dann besonders wünschenswert, wenn der Müllverdichter in Deponiebereichen mit gesundheitsgefährdendem Potential eingesetzt wird. Insbesondere zur Müllverteilung umfassen derartige Müllverdichter typischerweise weiter ein Räumschild im Frontbereich, mit dem Müll über den Deponiebereich verschoben werden kann. Für einen effektiven Betrieb des Müllverdichters ist eine ausreichende Luftversorgung insbesondere des Antriebsmotors, speziell zu Kühlzwecken und zur Gewährleistung eines optimalen Verbrennungsprozesses, erforderlich. Hierzu ist eine Luftansaugeinrichtung vorhanden, über die Umgebungsluft angesaugt und einem Kühler und/oder dem Verbrennungsmotor ganz besonders zu Kühlzwecken zugeleitet wird.

Da Müllverdichter häufig in einer sehr staubigen und Partikel belasteten Umgebung eingesetzt werden und zudem einen aufgrund langer Betriebsintervalle des Verbrennungsmotors im Hochlastbereich erhöhten Kühlluftbedarf haben, sind die Ansaugöffnungen der Luftansaugeinrichtung, die zudem häufig Teil einer Filtereinrichtung sein können, bevorzugt erhöht, insbesondere auf Höhe der Fahrerkabine, angeordnet. Zur Ansaugung sind ferner entsprechende Ventilatoren vorgesehen. Die Luftansaugeinrichtung umfasst ferner ein Gehäuse, durch das die angesaugte Luft zumindest für einen Teilbereich zum Verbrennungsmotor, der üblicherweise unter einer Haube verdeckt und aus Schwerpunktgründen vergleichsweise tiefliegend angeordnet ist, hin geleitet wird. Bei bisherigen Müllverdichtern ist die Luftansaugeinrichtung ferner häufig in Vorwärtsrichtung des Müllverdichters hinter der Fahrerkabine angeordnet, wodurch jedoch der Sichtbereich des Fahrers nach hinten sehr stark eingeschränkt ist. Die Anmelderin hat dieses Problem bei ihren Müllverdichtern dadurch gelöst, dass dicke Seitenholme der Luftansaugeinrichtung als Teil ihres Gehäuses zur Luftführung auf der linken und der rechten Seite und hinter der Fahrerkabine angeordnet werden, zwischen denen gerade nach hinten hindurch gesehen werden kann. Diese Seitenholme verhindern allerdings einen sogenannten Seitenblick, sprich den Blick des Fahrers von der Fahrerkabine aus seitlich über seine Schulter nach hinten. Dies wird von den Fahrern solcher Müllverdichter regelmäßig als nachteilig empfunden und stellt zudem aufgrund des begrenzten Sichtbereiches des Fahrers ein erhebliches Betriebsrisiko dar.

Die Aufgabe der Erfindung ist es daher, einen Müllverdichter anzugeben, der einen effizienten Betrieb bei erhöhtem Bedienungskomfort ermöglicht.

Die Lösung der Aufgabe gelingt mit einem Müllverdichter gemäß dem unabhängigen Anspruch. Bevorzugte Weiterbildungen sind in den abhängigen Ansprüchen angegeben.

Der wesentliche Grundgedanke der Erfindung liegt nun darin, das Gehäuse der Luftansaugeinrichtung mit einer Sichtausnehmung auszubilden, die einerseits optimierte Sichtverhältnisse für den Fahrer nach hinten, insbesondere über einen Schulterblick, ermöglicht und gleichzeitig eine optimierte und zuverlässige Luftführung von den Ansaugöffnungen der Luftansaugeinrichtung zum Kühler und/oder Verbrennungsmotor hin bereitstellt. Dazu ist es nun vorgesehen, dass die Luftansaugeinrichtung wenigstens eine zu einer Seite des Müllverdichters hin offene Sichtausnehmung aufweist, die in der Weise ausgebildet ist, dass ein Fahrer des Müllverdichters von der Fahrerkabine aus durch die Sichtausnehmung hindurch den hinter dem Müllverdichter liegenden Bereich wenigstens teilweise einsehen kann. Die Sichtausnehmung ist mit anderen Worten als von der Seite zur Maschinenmitte hin gerichtete Einbuchtung im Gehäuse der Luftansaugeinrichtung ausgebildet. Dadurch, dass die Sichtausnehmung zur Seite des Müllverdichters hin offen ist, kann der Fahrer, wenn er beispielsweise den Kopf nach links hinten dreht oder durch den linken Seitenspiegel blickt, bei einer auf der linken Seite befindlichen und entsprechend nach links offenen Sichtausnehmung entlang der Sichtausnehmung nach hinten blicken und verfügt dadurch über ein erheblich größeres Sichtfeld, als bei bisher verwendeten Müllverdichtern. Durch die Sichtausnehmung wird somit eine Art Blickkanal bereitgestellt, der in der Weise ausgebildet ist, dass der Fahrer durch den Kanal hindurch den hinter dem Müllverdichter liegenden Bereich einsehen kann. "Zu einer Seite des Müllverdichters hin offen" bedeutet dabei, dass die Sichtausnehmung nicht umlaufend ausgebildet ist, sondern zu einer Längsseite des Müllverdichters gerichtet hin offen ist. Die Längsseiten des Müllverdichters sind dabei die in Arbeitsrichtung verlaufenden Außenseiten des Müllverdichters, vertikal zur Horiztonalebene. Gemeinhin werden die Längsseiten auch als rechte und als linke Seite des Müllverdichters bezeichnet. Von hinten in Arbeitsrichtung auf den Müllverdichter gesehen hat die Sichtausnehmung daher die Form einer, insbesondere in Arbeitsrichtung längserstreckt verlaufenden, Einbuchtung. Die Seite, zu der die Sichtausnehmung hin offen ist, ist somit diejenige Seite des Müllverdichters, die bei Geradeausfahrt im Wesentlichen parallel zur Arbeitsrichtung des Müllverdichters liegt. Die Ebenen der erfindungsgemäß bezeichneten Seiten sind also im Wesentlichen rechtwinklig zu einer in der Horizontalen und quer zur Arbeitsrichtung des Müllverdichters sich erstreckenden Geraden ausgerichtet. Dadurch, dass die Sichtausnehmung zu wenigstens einer Seite, d.h. nach rechts oder links, hin offen ausgebildet ist, versperrt zu dieser Seite kein massiver,. außenliegender Seitenholm den Blick nach hinten. Dadurch werden die Sichtverhältnisse für den Fahrer in diesem Bereich erheblich verbessert.

In der konkreten Umsetzung des erfindungsgemäßen Grundgedankens kann grundsätzlich auf ein breites Spektrum an Formgebungen der Luftansaugeinrichtung zurückgegriffen werden. Bevorzugt ist es allerdings, wenn die Luftansaugeinrichtung ausgehend von einem aufragenden Mittelteil zu beiden Seiten des Müllverdichters jeweils eine Sichtausnehmung aufweist. Auch hier handelt es sich um diejenigen Seiten, die bei Geradeausfahrt im Wesentlichen parallel zur Arbeitsrichtung des Müllverdichters liegen. Der Müllverdichter weist also zwei solche Seiten auf, wobei eine der Sichtausnehmungen immer nur zu einer der beiden Seiten hin offen ausgebildet ist. Es handelt sich also mit anderen Worten um die linke und die rechte Seite des Müllverdichters. Explizit nicht gemeint sind die in Arbeitsrichtung vorne und hinten liegende Vorder- und Rückseite des Müllverdichters. Die Luftansaugeinrichtung weist bei dieser Ausführungsform somit wenigstens einen schornsteinartig aufragenden Mittelteil auf, der in Bezug auf den Müllverdichter idealerweise mittig zur beiden Seiten und sich in Vertikalrichtung erstreckend ausgebildet ist. Insbesondere im Vergleich zur Fahrerkabine ist die Luftansaugeinrichtung auf Höhe der wenigstens einen Sichtausnehmung somit in diesem Bereich verhältnismäßig schmal ausgebildet. Um dennoch eine ausreichend große Ansaugfläche für Umgebungsluft zur Verfügung zu stellen, schließt sich an diesen vergleichsweise schmalen Mittelteil vorzugsweise ein sich zumindest in die Maschinenbreite aufweitender Dach- beziehungsweise Kopfbereich an, in den eine oder mehrere Ansaugöffnungen großflächig integriert sind. Insgesamt weist die Luftansaugeinrichtung somit um Vertikalschnitt quer zur Vorwärtsrichtung des Müllverdichters eine vorzugsweise T-förmige Grundstruktur auf. Das beidseitige Vorsehen einer Sichtausnehmung ermöglicht optimierte Sichtverhältnisse zu beiden Rückseiten des Müllverdichters. Besonders bevorzugt ist die Luftansaugeinrichtung bezüglich ihrer Außenfläche ferner zu beiden Seiten des Müllverdichters symmetrisch ausgebildet. Auf diese Weise werden für beide Seiten gleiche Sichtbedingungen für den Fahrer geschaffen. Idealerweise ist der Kopfbereich dabei ferner derart beschaffen, dass er nach oben und/oder zu den Seiten im Wesentlichen bündig mit der Fahrerkabine abschließt.

Grundsätzlich ist es naturgemäß bevorzugt, die Breite der Sichtausnehmung so groß wie möglich zu gestalten, um das Ausmaß der Sichtbehinderung durch die Luftansaugeinrichtung so klein wie möglich zu halten. Allerdings muss gleichzeitig eine effiziente und ausreichende Luftführung von den Ansaugöffnungen der Luftansaugeinrichtung in Richtung zum Antriebsmotor hin gewährleistet werden. Im praktischen Einsatz hat sich nun gezeigt, dass die minimale Breite der Sichtausnehmung in Horizontalrichtung und quer zur Vorwärtsrichtung maximal im Bereich 0,1 bis 0,4, insbesondere 0,15 bis 0,3, und ganz besonders 0,2 bis 0,25 der Breite der Fahrerkabine liegt. Die Breite bezeichnet dabei den jeweiligen Horizontalabstand der Außenflächen der Luftansaugeinrichtung quer zur Vorwärtsrichtung des Müllverdichters; aus der Sicht des Fahrers somit nach rechts und nach links. Es hat sich gezeigt, dass in diesen Bereichen einerseits bereits eine erhebliche Verbesserung der Sichtbedingungen für den Fahrer erreicht wird und andererseits der von der Luftansaugeinrichtung eingeschlossene Luftführungsbereich noch ausreichend groß bemessen ist.

Häufig ragen Teilbereiche des Antriebsmotors beziehungsweise der diesen abdeckenden Haube nach oben auf und/oder erstrecken sich zu den Seiten des Müllverdichters. Erfindungsgemäß ist der Müllverdichter nun in der Weise ausgebildet, dass sich die wenigstens eine Sichtausnehmung in Längsrichtung des Müllverdichters von der Kabinenrückseite bis nahezu zum hinteren Ende des Müllverdichters erstreckt. Dies bedeutet insbesondere, dass sie sich bevorzugt von der Luftansaugeinrichtung kommend in insbesondere der Motorhaube weiter fortsetzt und eine sich über den gesamten hinteren Bereich über die Luftansaugeinrichtung und die Motorhaube hinweg erstreckende Sichtausnehmung bildet. Die Sichtausnehmung bildet also eine im Wesentlichen parallel zur Maschinenlängsachse des Müllverdichters liegende Einbuchtung. Die Einbuchtung kann sich durch sämtliche Elemente des Müllverdichters erstrecken, um durch die Einbuchtung einen von der Fahrerkabine nach hinten durchlaufenden Sichtkanal zu erhalten. Bei dieser Ausführungsform werden somit auch noch weitere Elemente des Müllverdichters zur Bildung und Ausformung ergänzend zur Luftansaugeinrichtung herangezogen, wodurch besonders optimierte Sichtbedingungen geschaffen werden können. Typische Elemente, in denen sich die Sichtausnehmung fortsetzen kann, sind neben der Motorhaube beispielsweise Haltegeländer und/oder Auspuffelemente und/oder andere potentiell im Blickfeld nach hinten des Fahrers befindliche Bauteile des Müllverdichters. An der erfindungsgemäßen, die Sichtausnehmung bildenden Einbuchtung wird die angesaugte Luft innen liegend von der Luftansaugeinrichtung von vertikal oben kommend nach unten vorbei geleitet, ohne dabei die Sicht des Fahrers in Arbeitsrichtung nach hinten übermäßig zu beeinträchtigen.

Idealerweise ist die Luftansaugeinrichtung Teil einer ROPS-Struktur ist. ROPS (*roll over protective structure*) bezeichnet dabei allgemein einen Überrollschutz. Derartige Strukturen sollen im Kollisionsfall, beispielsweise beim Umkippen des Müllverdichters, eine übermäßige Verformung der Fahrerkabine zum Schutz des Fahrers verhindern. Bekannt ist es dabei, die Fahrerkabine an sich mit einer geeigneten ROPS-Struktur zu versehen, beispielsweise in Form einer Rahmen- und/oder Gitterstruktur. Erfindungsgemäß ist es nun allerdings vorgesehen, die Luftansaugeinrichtung in der Weise auszubilden, dass sie ebenfalls zumindest teilweise als ROPS-Struktur für die Fahrerkabine wirkt. Die Luftansaugeinrichtung ist mit anderen Worten bevorzugt in der Weise ausgebildet, dass sie zur zumindest teilweisen Aufnahme und/oder Ableitung von an der Fahrerkabine insbesondere im Kollisionsfall lastenden Kräften ausgebildet ist. Dazu ist die Luftansaugeinrichtung besonders bevorzugt an die Fahrerkabine, insbesondere deren Rückseite, angeschlossen, wobei über den Anschluss eine entsprechende Kraftüberleitung von der Fahrerkabine auf die Luftansaugeinrichtung möglich ist. Grundsätzlich ist es dazu möglich, die Fahrerkabine direkt und unmittelbar mit der Luftansaugeinrichtung zu verbinden, wobei dann im Regelfall eine vergleichsweise steife Verbindung erhalten wird. Bevorzugt erfolgt die Anbindung indirekt, so dass die Luftansaugeinrichtung mit der Fahrerkabine, insbesondere mit deren Rückseite, beispielsweise über eine Verbindungseinrichtung indirekt verbunden ist.

Zur konkreten Ausbildung der Verbindungseinrichtung kann dabei auf ein breites Spektrum alternativer Möglichkeiten zurückgegriffen werden, solange eine stabile und ausreichend belastbare Verbindung zwischen Fahrerkabine und Luftansaugeinrichtung sichergestellt ist. Bevorzugt umfasst die Verbindungseinrichtung daher beispielsweise auch elastomere Verbindungselemente, wie beispielsweise Gummipuffer. Durch solche Elemente ist eine zwar teilweise elastische aber gleichzeitig ausreichend belastbare Verbindung zwischen der Fahrerkabine und der Luftansaugeinrichtung möglich. Zur Anbindung der elastomeren Verbindungselemente der Verbindungseinrichtung sind vorzugsweise an der Fahrerkabine und/oder an der Luftansaugeinrichtung Haltelaschen vorhanden, die zur Aufnahme wenigstens eines elastomeren Verbindungselementes ausgebildet sind. Idealerweise sind die Haltelaschen an der Fahrerkabine und/oder der Luftansaugeinrichtung horizontal und quer zur Vorwärtsrichtung des Müllverdichters nebeneinander und pro elastomerem Verbindungselement einander gegenüberliegend angeordnet. Dies bedeutet insbesondere, dass eine seitliche Druckbelastung auf die Fahrerkabine eine Druck- oder Zugbelastung der Verbindungseinrichtung und insbesondere der elastomeren Verbindungselemente bewirkt. Derartige Druck- oder Zugbelastungen sind zur Kraftübertragung wesentliche unkritischer als Schwerbeanspruchungen, die im Einzelfall einen vergleichsweise frühen Ausfall eines oder mehrerer elastomerer Verbindungselemente bewirken können.

Erfindungsgemäß ist es somit, wie vorstehend bereits dargelegt, vorgesehen, dass die Luftansaugeinrichtung in Vorwärtsrichtung des Müllverdichters gesehen sich zumindest teilweise über die Rückseite der Fahrerkabine erstreckt und durch die Sichtausnehmung eine entsprechende Durchsichtmöglichkeit nach hinten zum hinter dem Müllverdichter liegenden Bereich geschaffen wird. Dazu kann es vorgesehen sein, dass die Fahrkabine und die Luftansaugeinrichtung nahezu plan einander gegenüberliegen. Bevorzugt ist es jedoch, wenn die Fahrerkabine und die Luftansaugeinrichtung im Bereich der einander gegenüberliegenden Flächen wenigstens teilweise ineinander eingreifend V-förmig ausgebildet sind. Idealerweise verjüngt sich die Fahrerkabine dabei in Vorwärtsrichtung des Müllverdichters nach hinten in der Horizontalebene zur Mitte der Maschine hin und wird in diesem Bereich von der Luftansaugeinrichtung zumindest teilweise umgriffen. Dadurch gelingt einerseits eine optimierte Platzausnutzung, da im Querschnitt mehr Fläche für die Luftführung in der Luftansaugeinrichtung erhalten wird und die Fahrerkabine vom Platz her nur dort beschnitten wird, wo sich der Fahrer bei herkömmlichen Fahrerkabinen nicht aufhält. Dadurch schlägt die Fahrerkabine bei einer Seitenbelastung ab einem bestimmten Ausschlag an der Wandung der Luftansaugeinrichtung an, wodurch ein nochmals verstärkter ROPS-Effekt erhalten wird.

Nachstehend wir die Erfindung anhand des in den Figuren angegebenen Ausführungsbeispiels näher erläutert. Es zeigen schematisch:
Fig. 1 eine Seitenansicht auf einen Müllverdichter;
Fig. 2 eine perspektivische Schrägansicht auf den Müllverdichter aus Fig. 1 von schräg hinten;
Fig. 3 eine Rückansicht auf den Müllverdichter aus den Figuren 1 und 2;
Fig. 4 eine Schnittansicht eines Teilbereiches des Müllverdichters entlang der Linie I-I aus Fig. 1;
Fig. 5 eine Schnittansicht entlang der Linie II-II eines Teilbereiches des Müllverdichters aus Fig. 3;
und
Fig. 6 eine Draufsicht auf den Müllverdichter gemäß den Figuren 1 bis 3.

Gleiche Bauteile sind in den Figuren mit gleichen Bezugszeichen angegeben, wobei nicht jedes sich wiederholende Bauteil zwangsläufig in jeder der Figuren bezeichnet ist.

Wesentliche Elemente des Müllverdichters 1 sind ein Maschinenrahmen 2 mit einem Vorderrahmen 3 und einem Hinterrahmen 4, am Maschinenrahmen 2 gelagerte Fahreinrichtungen 5, die vorliegend als Schaffußbandagen ausgebildet sind, ein Knickgelenk 6, über das der Vorderrahmen 3 und der Hinterrahmen 4 miteinander verbunden sind, ein am Vorderrahmen 3 gelagerter Räumschild 7 sowie am Hinterrahmen ein Antriebsmotor 8 (vorliegend von der Haube 10 verdeckt) und eine Fahrerkabine 9. Weiteres wesentliches Element ist eine Luftansaugeinrichtung 11, die in Vorwärtsrichtung beziehungsweise Arbeitsrichtung a des Müllverdichters 1 hinter der Fahrerkabine 9 angeordnet ist. Im Arbeitsbetrieb rangiert der Müllverdichter 1 insbesondere in und entgegen der Vorwärtsrichtung a über den zu verdichtenden, zu zerkleinernden und/oder zu verschiebenden Müll. Dabei ist eine erhebliche Kühlluftversorgung der Antriebsmotors 8 erforderlich. Umgebungsluft wird dazu in Pfeilrichtung b über die Luftansaugeinrichtung 11 angesaugt und im Inneren (gestrichelte Pfeile) der Luftansaugeinrichtung 11 zum Antriebsmotor 8 hin geleitet und über Auslassöffnungen in Pfeilrichtung c über die Haube 10 wieder an die Außenumgebung abgegeben. Ergänzend oder alternativ kann es auch vorgesehen sein, dass über die Luftansaugeinrichtung 11 Umgebungsluft angesaugt wird, die entsprechend aufbereitet zur Luftversorgung des Innenraums der Fahrerkabine 9 dienen kann. Zur Ansaugung von Luft ist eine Vielzahl von Ansaugöffnungen 12 in der Luftansaugeinrichtung 11 vorhanden.

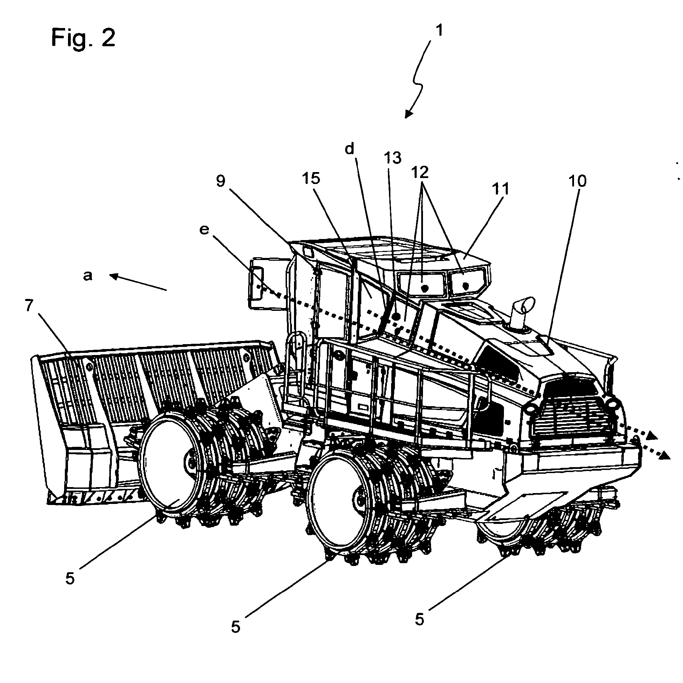

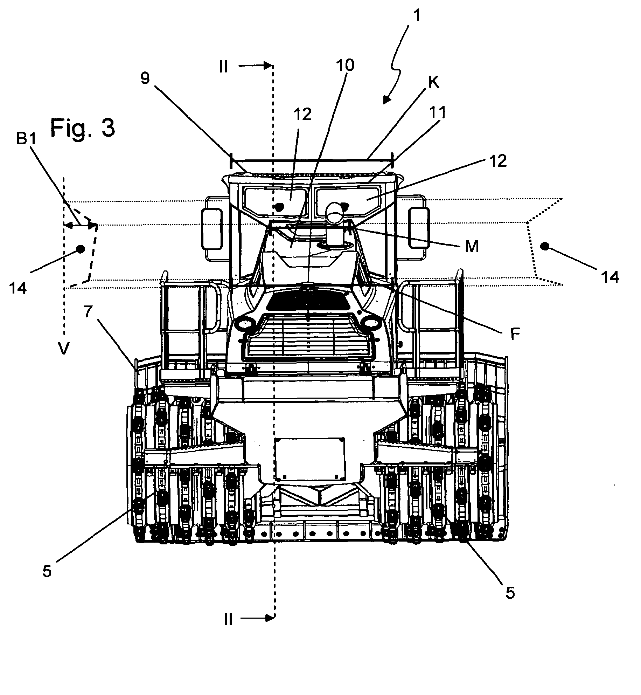

Die Luftansaugeinrichtung 11 erstreckt sich dabei bezüglich ihrer Höhe H in Vertikalrichtung bis an den oberen Dachbereich der Fahrerkabine 9 und schließt nach oben im Wesentlichen bündig mit dieser ab. Auch die Breite B der Luftansaugeinrichtung 11, dass heißt deren Erstreckung in der Horiztonalebene quer zur Vorwärtsrichtung a, entspricht im Dachbereich im Wesentlichen der Fahrerkabine 9. Insbesondere die Figuren 2 und 3 verdeutlichen dabei, dass die Anordnung der Luftansaugeinrichtung 11 in Fahrtrichtung hinter der Fahrerkabine 9 potentiell eine Sichtbehinderung für den in der Fahrerkabine 9 sitzenden Fahrer des Müllverdichters 1 darstellen kann, insbesondere wenn sie so wie im Stand der Technik bisher bekannt ausgebildet ist (in den Figuren nicht gezeigt).

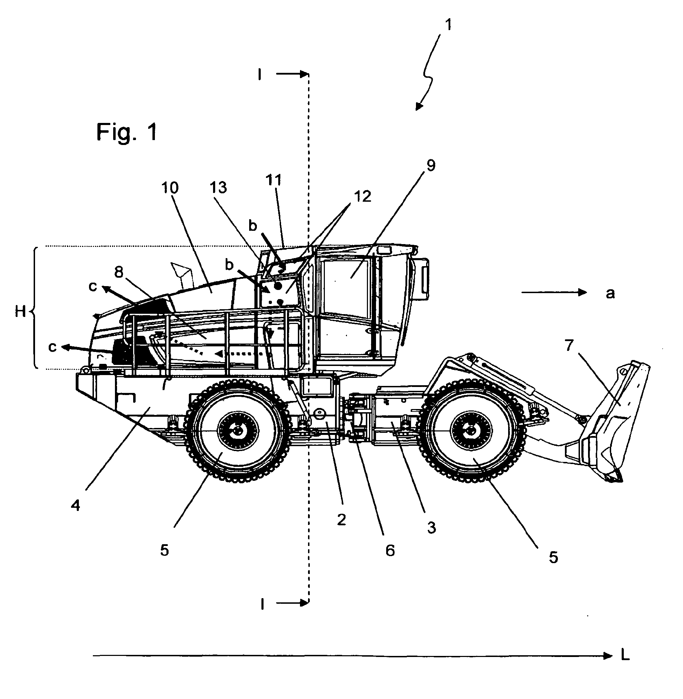

In der erfindungsgemäßen Ausbildung des Müllverdichters 1 ist es nun allerdings vorgesehen, dass zumindest die Luftansaugeinrichtung 11 wenigstens eine Sichtausnehmung 13 aufweist, durch die hindurch ein sich in der Fahrerkabine 9 befindlicher Fahrer nach hinten den hinter dem Müllverdichter 1 liegenden Bereich wenigstens teilweise entweder per Schulterblick oder durch einen Rückspiegel, einsehen kann. Im vorliegenden Ausführungsbeispiel ist zu beiden bei Geradeausfahrt im Wesentlichen parallel zur Vorwärtsrichtung beziehungsweise Arbeitsrichtung a des Müllverdichters liegenden Seiten der Luftansaugeinrichtung 11 jeweils eine Sichtausnehmung 13 vorhanden. Der Verlauf der Sichtachse des in der Fahrerkabine 9 befindlichen Fahrers ist durch die Pfeile d (für einen Schulterblick) und e (für einen Blick durch den Rückspiegel entlang der Sichtausnehmung 13) in Fig. 2 veranschaulicht. Die Sichtausnehmungen 13 sind somit nicht umlaufend eingerahmt, sondern jeweils zu einer Seite, d.h. bezogen auf die Längserstreckung L (Fig. 1) des Müllverdichters senkrecht hierzu nach außen, d.h. bezogen auf die Längserstreckung L nach rechts oder nach links, offen ausgebildet. Die Sichtausnehmungen 13 stellen somit bezogen auf die Gesamtaußenoberfläche des Müllverdichters 1 von der rechten oder linken Außenseite kommende, zum Maschineninneren orientierte Einwölbungen dar, die jeweils einen von der Fahrerkabine aus nach hinten verlaufenden Sichtkanal bilden.

Konkret sind zur Ausbildung der Sichtausnehmungen 13 in der Luftansaugeinrichtung 11 auf jeder Seite jeweils eine zur Seite des Müllverdichters 1 hin offene Einbuchtung 14 beziehungsweise Einwölbung in der Außenoberfläche der Luftansaugeinrichtung 11 vorhanden. Dies ergibt sich beispielsweise besonders gut aus beispielsweise Fig. 3, in der der Oberflächenverlauf der Sichtausnehmungen 13 zu beiden Seiten des Müllverdichters verschoben herausgehoben ist. Einbuchtung bzw. Einwölbung ist dabei auf einen wenigstens im Bereich der Seitenausnehmung 13 zur Maschinenmitte 13 hin erfolgenden Verlauf der Außenoberfläche der Luftansaugeinrichtung 11 in Vertikalrichtung bezogen, wobei in Vertikalrichtung der Kopfbereich und der Fußbereich in Bezug auf den Bereich der Seitenausnehmung weiter nach außen beziehungsweise weiter von der Mitte des Müllverdichters 1 weg versetzt verlaufen. Bezüglich ihrer räumlichen Ausbildung umfasst die Luftansaugeinrichtung 11 somit im Wesentlichen eine in Bezug auf die Seitenerstreckung breiten Fußbereich F, einen demgegenüber zur Mitte hin schmaleren Mittelbereich M und einen zu den Seiten auskragenden Kopfbereich K, wie in Fig. 3 näher angegeben. Zumindest in Bezug auf den oberen Querschnitt hat die Luftansaugeinrichtung 11 somit einen T-förmigen Querschnitt umfassend den Kopfbereich K und den Mittelbereich M.

Zur Breite B der Luftansaugeinrichtung 11 weist die die Sichtausnehmung in der Luftansaugeinrichtung 11 in Bezug auf eine Vertikale V eine Breite B1 von 0,2 B auf. Die Einwölbung 14 ist in Bezug auf den Querschnitte der Maschine in einer Vertikalebene senkrecht zur Vorwärtsrichtung a mit anderen Worten maximal bis zu einem fünftel der maximalen Breite der Luftansaugeinrichtung 11 zur Maschinenmitte hin eingewölbt ausgebildet.

Zur Fahrerkabine 9 hin schließt die Sichtausnehmung 13 jeweils mit einem Fenster 15 ab, so dass der Fahrer aus der Fahrerkabine 9 heraus entlang der Sichtausnehmung nach hinten blicken kann. Die Sichtausnehmung 13 beziehungsweise die Einbuchtung/Einwölbung 14 verläuft also von der Fahrerkabine 9 im Wesentlichen parallel zur Maschinenlängsachse des Müllverdichters 1 in Arbeitsrichtung a nach hinten.

Beim vorliegenden Ausführungsbeispiel ist die Ausbildung der Sichtausnehmung 13 zudem nicht auf die entsprechenden Einwölbungen 14 in der Außenoberfläche der Luftansaugeinrichtung 11 beschränkt, sondern setzt sich nach hinten übergangslos in der Haube 10 fort. Dort ist eine im Übergangsbereich zur Luftansaugeinrichtung 11 komplementäre Querschnittsausbildung vorhanden. Die Sichtausnehmungen 13 verlaufen somit auf beiden Seiten von der Fahrerkabine 9 kommend frei von Sichthindernissen durch die Luftansaugeinrichtung 11 über die Haube 10 hinweg bis zum hinteren Ende des Müllverdichters, so dass über den gesamten hinteren Maschinenbereich des Müllverdichters 10 ein durchgehende Sichtkanal für den in der Fahrerkabine befindlichen Fahrer zur Verfügung gestellt wird. Insbesondere im Bereich der Haube 10 ist die Sichtausnehmung 13 darüber hinaus mit ihrem Boden in Richtung nach hinten nach unten abfallend und zur Mitte des Müllverdichters hin gekurvt ausgebildet. Dadurch werden die Sichtverhältnisse für den Fahrer insbesondere im nahen hinter dem Müllverdichter liegenden Bereich verbessert.

Ein weiteres wesentliches Merkmal des vorliegenden Ausführungsbeispiels liegt darin, dass die Luftansaugeinrichtung 11 teilweise als ROPS-Struktur für die Fahrerkabine 9 wirkend ausgebildet ist. Die Fahrerkabine 9 und die Luftansaugeinrichtung 11 sind damit über Verbindungseinrichtungen 16 miteinander verbunden, deren konkreter Aufbau nachstehend näher beschrieben werden wird. Der Effekt dieser Anordnung liegt darin, dass an der Fahrerkabine anliegende Belastungen, insbesondere Seitenbelastungen horizontal und quer zur Vorwärtsrichtung a, wenigstens teilweise auf die Luftansaugeinrichtung 11 abgeleitet werden, so dass das Verformungsrisiko der Fahrerkabine 9 bei entsprechenden Belastungen gesenkt ist.

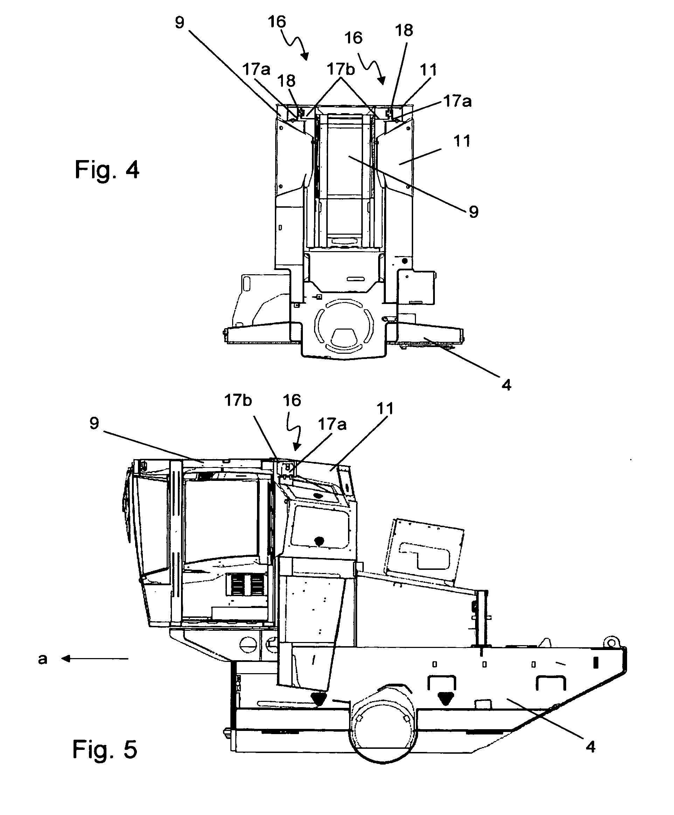

Die Fahrerkabine 9 und die Luftansaugeinrichtung 11 sind dabei nicht steif miteinander verbunden, sondern innerhalb eines festgelegten Bereiches elastisch. Dazu sind an der Fahrerkabine 9 und an der Luftansaugeinrichtung 11 jeweils Haltelaschen 17 (17a an der Fahrerkabine und 17b an der Luftansaugeinrichtung 11) als Teil der Verbindungseinrichtung 16 vorhanden, wie sie beispielsweise in den Schnittansichten gemäß der Fig. 4 (entlang der Linie I-I in Fig. 1) und Fig. 5 (entlang der Linie II-II in Fig. 3) erkennbar sind. Nicht sichtbar ist der Umstand, dass insgesamt mehr als zwei Verbindungseinrichtungen 16 zwischen der Fahrerkabine 9 und der Luftansaugeinrichtung 11 vorhanden sind. Die Haltelaschen 17 sind jeweils paarweise miteinander über ein Elastomerelement 18 verbunden. Die Ausbildung der Haltelaschen 17 ist dabei so vorgenommen, dass sie horizontal und quer zur Vorwärtsrichtung a einander gegenüberliegen. Die durch das Elastomerelement 18 erhaltene Verbindungsachse zwischen den Haltelaschen 17a und 17b verläuft somit horizontal und quer zur Arbeitsrichtung a. Bei Seitenbelastungen der Fahrerkabine, beispielsweise bei umgekippter Maschine, werden Belastungskräfte somit nahezu senkrecht zwischen den Anlageflächen der Haltelaschen 17a und 17b am Elastomerelement 18 übertragen, so dass in diesem Falle nahezu ausschließlich Zugund Druckbelastungen am Elastomerelement auftreten, gleichzeitig aber nahezu keine Scherbeanspruchungen. Insgesamt wird durch diese Ausbildung der Gesamtheit aus Fahrerkabine 9 und Luftansaugeinrichtung 11 somit eine vergleichsweise stark belastbare Gesamtstruktur erhalten und die Luftansaugeinrichtung 11 übernimmt zusätzlich zu Luftführung und Sichtfreigabe eine Stabilisierungsfunktion für die Fahrerkabine 9.

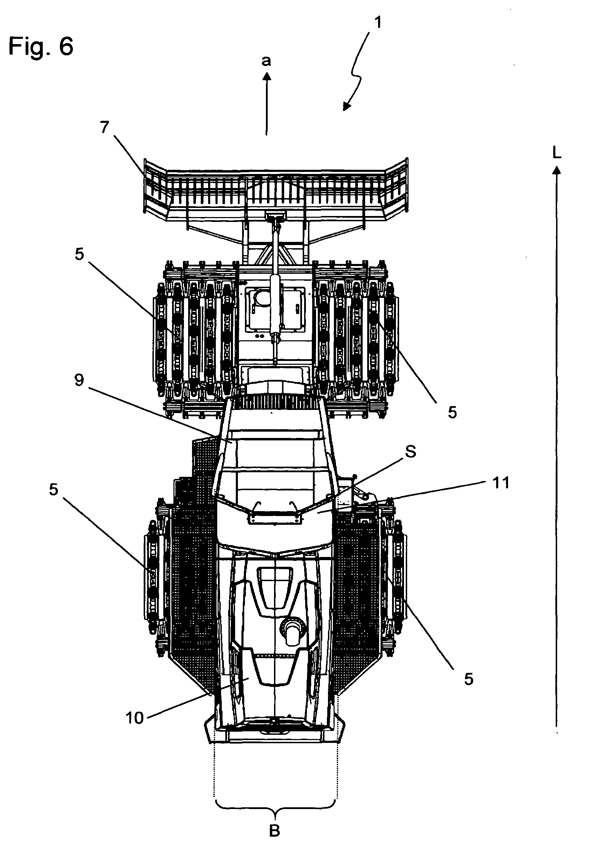

Insbesondere aus der Draufsicht aus Fig. 6 ergibt sich ferner ein weiteres Detail des erfindungsgemäßen Müllverdichters 1. Fig. 6 verdeutlicht, dass die Fahrerkabine in Bezug auf ihren Außenumfang in der Horizontalebene sich nach hinten und zur Mitte in Richtung auf die Luftansaugeinrichtung 11 verjüngend ausgebildet ist. Die in diesem Bereich komplementär ausgebildete und über einen Abstandsspalt S beabstandete Luftansaugeinrichtung 11 weist entsprechend einen V-förmigen Querschnitt auf und umgreift beziehungsweise überlappt die Fahrerkabine 9 zur Seite des Müllverdichters 1 von der Mitte nach außen. Durch diesen teilweisen Umgriff ist die Fahrerkabine weiter gegen seitliches Verkippen relativ zum Maschinenrahmen 2 gesichert.

## Patentansprüche

1. Müllverdichter (1) mit einem Maschinenrahmen (4), Fahreinrichtungen (5), einem Antriebsmotor, einer Fahrerkabine (9), die auf dem Maschinenrahmen angeordnet ist, und mit einer Luftansaugeinrichtung mit wenigstens einer Ansaugöffnung, wobei die Luftansaugeinrichtung in Vorwärtsrichtung hinter der Fahrerkabine angeordnet ist und sich wenigstens teilweise über die Rückseite der Fahrerkabine bis hin zum Dach der Fahrerkabine in Vertikalrichtung erstreckt,
**dadurch gekennzeichnet,**
**dass** die Luftansaugeinrichtung (13) wenigstens eine zu einer bei Geradeausfahrt im Wesentlichen parallel zur Arbeitsrichtung des Müllverdichters liegenden Seite des Müllverdichters hin offene Sichtausnehmung aufweist, die in der Weise ausgebildet ist, dass ein Fahrer des Müllverdichters von der Fahrerkabine aus durch die Sichtausnehmung hindurch den hinter dem Müllverdichter liegenden Bereich wenigstens teilweise einsehen kann.

2. Müllverdichter gemäß Anspruch 1,
**dadurch gekennzeichnet,**
**dass** die Luftansaugeinrichtung (13) ausgehend von einem aufragenden Mittelteil zu beiden bei Geradeausfahrt im Wesentlichen parallel zur Arbeitsrichtung des Müllverdichters liegenden Seiten des Müllverdichters jeweils eine Sichtausnehmung aufweist.

3. Müllverdichter gemäß einem der vorhergehenden Ansprüche,
dadurch **gekenntzeichnet,**
dass die Luftansaugeinrichtung (13) eine T-Struktur aufweist und sich in Vertikalrichtung nach oben an den Mittelteil ein sich zu beiden bei Geradeausfahrt im Wesentlichen parallel zur Arbeitsrichtung des Müllverdichters liegenden Seiten erstreckender Dachbereich anschließt.

4. Müllverdichter gemäß einem der vorhergehenden Ansprüche,
**dadurch gekennzeichnet,**
**dass** die Breite der Sichtausnehmung(e) in Horizontalrichtung und quer zur Vorwärtsrichtung maximal im Bereich 0,1 bis 0,4, insbesondere 0,15 bis 0,3, und ganz besonders 0,2 bis 0,25 der Breite der Fahrerkabine liegt.

5. Müllverdichter gemäß einem der vorhergehenden Ansprüche,
**dadurch gekennzeichnet,**
**dass** sich die wenigstens eine Sichtausnehmung(e) von der Kabinenrückseite bis nahezu zum hinteren Ende das Müllverdichters erstreckt.

6. Müllverdichter gemäß einem der vorhergehenden Ansprüche,
**dadurch gekennzeichnet,**
**dass** die Luftansaugeinrichtung (13) Teil einer ROPS-Struktur ist.

7. Müllverdichter gemäß einem der vorhergehenden Ansprüche,
dadurch **gekennzeichne**t,
dass die Luftansaugeinrichtung mit der Fahrerkabine (9), insbesondere mit deren Rückseite, über eine Verbindungseinrichtung verbunden ist.

8. Müllverdichter gemäß Anspruch 7,
**dadurch gekennzeichnet,**
**dass** die Verbindungseinrichtung an der Fahrerkabine (9) und/oder an der Luftansaugeinrichtung Haltelaschen aufweist, die zur Aufnahme wenigstens eines elastomeren Verbindungselementes ausgebildet sind.

9. Müllverdichter gemäß Anspruch 8,
**dadurch gekennzeichnet,**
**dass** die Haltelaschen an der Fahrerkabine (9) und der Luftansaugeinrichtung horizontal und quer zur Vorwärtsrichtung des Müllverdichters einander gegenüberliegend angeordnet sind.

10. Müllverdichter gemäß einem der vorhergehenden Ansprüche,
**dadurch gekennzeichnet,**
**dass** die Fahrerkabine (9) und die Luftansaugeinrichtung im Bereich der einander gegenüberliegenden Flächen wenigstens teilweise ineinander eingreifend V-förmig ausgebildet sind.

## Claims

1. A refuse compactor (1), comprising a machine frame (4), transportation devices (5), a drive motor, a driver's cab (9) which is arranged on the machine frame, and an air intake device with at least one intake opening, wherein the air intake device is arranged in the forward direction behind the driver's cab and extends at least partly over the rear side of the driver's cab up to the roof of the driver's cab in the vertical direction, **characterized in that** the air intake device (13) comprises at least one vision recess which is open to one side of the refuse compactor situated substantially parallel to the working direction of the refuse compactor during straight travel and which is arranged in such a manner that a driver of the refuse compactor is able to see the region situated behind the refuse compactor at least in part from the driver's cab through the vision recess.

2. A refuse compactor according to claim 1,
**characterized in that**
the air intake device (13), originating from an upwardly extending central part, comprises one respective vision recess on both sides of the refuse compactor situated during straight travel substantially parallel to the working direction of the refuse compactor.

3. A refuse compactor according to any one of the preceding claims,
**characterized in that**
the air intake device (13) has a T-shaped structure and a roof region extending on both sides of the refuse compactor, which sides are situated during straight travel substantially parallel to the working direction of the refuse compactor, is upwardly adjacent in the vertical direction to the middle part.

4. A refuse compactor according to any one of the preceding claims,
**characterized in that**
the width of the vision recess (e) in the horizontal direction and transversely to the forward direction lies at most in the range of 0.1 to 0.4, especially 0.15 to 0.3, an even more especially 0.2 to 0.25 of the width of the driver's cab.

5. A refuse compactor according to any one of the preceding claims,
**characterized in that**
the at least one vision recess (e) extends from the rear side of the driver's cab up to close to the rear end of the refuse compactor.

6. A refuse compactor according to any one of the preceding claims,
**characterized in that**
the air intake device (13) is part of an ROPS structure.

7. A refuse compactor according to any one of the preceding claims,
**characterized in that**
the air intake device is connected to the driver's cab (9), especially to its rear side, via a connecting device.

8. A refuse compactor according to claim 7,
**characterized in that**
the connecting device on the driver's cab (9) and/or the air intake device comprises retaining lugs which are arranged for accommodating at least one elastomeric connecting element.

9. A refuse compactor according to claim 8,
**characterized in that**
the retaining lugs on the driver's cab (9) and the air intake device are arranged opposite of each other horizontally and transversely to the forward direction of the refuse compactor.

10. A refuse compactor according to any one of the preceding claims,
**characterized in that**
the driver's cab (9) and the air intake device are arranged at least partly to engage into each other in a V-shaped manner in the region of the mutually opposite surfaces.

## Revendications

1. Compacteur (1) de déchets, comprenant un châssis (4) de machine, des équipements de déplacement (5), un moteur d'entraînement, une cabine-conducteur (9) qui est placée sur le châssis de la machine, et un dispositif d'aspiration d'air avec au moins une ouverture d'aspiration, le dispositif d'aspiration d'air étant disposé dans le sens avant sur l'arrière de la cabine-conducteur et s'étendant au moins partiellement sur le côté arrière de la cabine-conducteur en montant jusqu'au toit de la cabine-conducteur dans la direction verticale,
***caractérisé en ce que***
le dispositif (13) d'aspiration d'air comprend au moins une ouverture pour la vision qui est ouverte sur un côté du compacteur de déchets situé sensiblement parallèle au sens de travail du compacteur de déchets lors d'un trajet rectiligne, et qui est agencée de telle manière qu'un conducteur du compacteur de déchets soit apte à visualiser au moins partiellement la zone située derrière le compacteur de déchets depuis la cabine-conducteur à travers l'ouverture pour la vision.

2. Compacteur de déchets selon la revendication 1,
***caractérisé en ce que***
le dispositif (13) d'aspiration d'air, en provenance d'une partie centrale s'étendant verticalement, comprend une ouverture respective pour la vision sur chacun des deux côtés du compacteur de déchets situées sensiblement parallèles au sens de travail du compacteur de déchets, lors d'un trajet rectiligne.

3. Compacteur de déchets selon l'une quelconque des revendications précédentes,
***caractérisé en ce que***
le dispositif (13) d'aspiration d'air présente une structure conformée en T, et une zone de toit s'étendant des deux côtés du compacteur de déchets, lesdits côtés étant, lors d'un trajet rectiligne, situés sensiblement parallèles au sens de travail du compacteur de déchets, est adjacente en direction du haut, dans le sens vertical, à la partie médiane.

4. Compacteur de déchets selon l'une quelconque des revendications précédentes,
***caractérisé en ce que***
la largeur de l'ouverture pour la vision (e) dans le sens horizontal et transversalement à la direction avant, est au plus de l'ordre de 0,1 à 0,4, en particulier de 0,15 à 0,3, et encore plus particulièrement de 0,2 à 0,25 fois la largeur de la cabine-conducteur.

5. Compacteur de déchets selon l'une quelconque des revendications précédentes,
***caractérisé en ce que***
ladite au moins une ouverture pour la vision (e) part du côté arrière de la cabine-conducteur en montant jusqu'à proximité de l'extrémité arrière du compacteur de déchets.

6. Compacteur de déchets selon l'une quelconque des revendications précédentes,
***caractérisé en ce que***
le dispositif d'aspiration d'air (13) fait partie d'une structure ROPS (de protection contre le renversement).

7. Compacteur de déchets selon l'une quelconque des revendications précédentes,
***caractérisé en ce que***
le dispositif d'aspiration d'air est relié à la cabine-conducteur (9), en particulier sur sa face arrière, par l'intermédiaire d'un dispositif de raccord.

8. Compacteur de déchets selon la revendication 7,
***caractérisé en ce que***
le dispositif de raccord sur la cabine-conducteur (9) et/ou sur le dispositif d'aspiration d'air comprend/comprennent des ergots de retenue qui sont agencés pour recevoir au moins un élément de raccord en élastomère.

9. Compacteur de déchets selon la revendication 8,
***caractérisé en ce que***
les ergots de retenue sur la cabine-conducteur (9) et sur le dispositif d'aspiration d'air sont disposés opposés les uns aux autres de manière horizontale et transversale à la direction avant du compacteur de déchets.

10. Compacteur de déchets selon l'une quelconque des revendications précédentes,
***caractérisé en ce que***
la cabine-conducteur (9) et le dispositif d'aspiration d'air sont disposés au moins en partie de manière à s'engager l'une dans l'autre selon une configuration en V dans la zone des surfaces opposées entre elles.
